# EUROPÄISCHE PATENTSCHRIFT

(11) **EP 2 620 247 B1**
(45) Veröffentlichungstag und Bekanntmachung des Hinweises auf die Patenterteilung: **16.09.2015**
(21) Anmeldenummer: 13002239.5
(22) Anmeldetag: 04.03.2010
(51) Int. Cl.: B23F 19/10, B23F 19/00

(54) **Verfahren zum Beseitigen eines Sekundärgrates an einem stirnverzahnten Werkstückrad**
Method for removing a secondary device on a frontally cogged workpiece wheel
Procédé d'élimination d'un appareil secondaire sur une roue de pièce usinée interdigitée à l'avant

(30) Priorität: 22.04.2009 DE 102009018405
(43) Veröffentlichungstag der Anmeldung: 31.07.2013
(62) Teilanmeldung aus: 10002238.3
(73) Patentinhaber: THE GLEASON WORKS, Rochester, New York 14607-1282 (US)
(72) Erfinder: Schäferling, Karl, 85716 Unterschleißheim (DE); Reichert, Gerhard, 82216 Maisach (DE); Oberlander, Stefan, 80339 München (DE)
(74) Vertreter: Leinweber & Zimmermann

(56) Entgegenhaltungen:
- EP-A1- 1 270 127
- DE-A1- 2 659 108
- DE-U1- 8 328 237
- DE-U1- 29 715 092
- US-A- 2 916 971

## Beschreibung

Die Erfindung bezieht sich auf ein Verfahren zum Beseitigen eines Sekundärgrates an einem verzahnten Werkstückrad, der durch eine Umarbeitung einer endseitigen Zahnkante eines Zahns in eine eine Endfläche und eine Zahnflanke des Zahns verbindende Fase in einem an die Fase angrenzenden Randbereich der Zahnflanke aufgeworfen wird, bei dem die Zahnflanken des Werkstückrades mit Zahnflanken eines verzahnten Werkzeugrades drehend in Zahneingriff gebracht werden.

Bei der spanenden Herstellung von Verzahnungen entsteht an den endseitigen Zahnkanten ein Grat, der aus verschiedenen Gründen beseitigt werden muß. Einer der Gründe liegt darin, daß eine Stirnfläche des Zahnrads in nachfolgenden Arbeitsgängen oft als planare Spann- oder Bestimmungsfläche dienen soll, deren Planarität durch den Grat gestört wird. Weiterhin würde der Grat nach der Härtung die Gefahr nach sich ziehen, daß er beim späteren Lauf des Zahnrades in einem Getriebe abspringt und eine Beschädigung der Zahnflanken oder von Getriebebauteilen herbeiführt. Davon abgesehen stellt ein solcher Grat auch eine Verletzungsgefahr bei der Handhabung der Werkstückräder dar. Weiterhin ist es nicht ausreichend, lediglich den Grat zu beseitigen, weil die verbleibende Zahnkante beim Härten durch Überkohlung glashart werden kann und dann unter Belastung ausbricht.

Deshalb wird bei einem bekannten Verfahren der eingangs genannten Art (EP 1 270 127 A1) die Zahnkante in eine Fase umgeformt, indem Material des Werkstückrades im Bereich der endseitigen Zahnkante durch ein damit in Zahneingriff abwälzendes Anfasrad verdrängt wird. Bei dieser plastischen Umformung wird jedoch in dem an die Fase angrenzenden Randbereich der Zahnflanke ein Sekundärgrät aufgeworfen. Dieser Sekundärgrat stellt ein großes Problem für die nachfolgende Hartbearbeitung, beispielsweise durch Honen oder Schleifen, dar. Er führt zu einer vorzeitigen Abnutzung des Hartbearbeitungswerkzeugs und erfordert entsprechend häufige Abrichtvorgänge des Nachbearbeitungswerkzeugs. Deshalb wird bei dem genannten Stand der Technik das Werkstückrad mit einem verzahnten Glättrad in Zahneingriff gebracht, wodurch der Sekundärgrat durch Nachdrücken glattgewalzt werden soll. Allerdings ist hier eine vollständig zufriedensteilende Beseitigung des Sekundärgrates nicht erreichbar.

DE 8328237 U offenbart ein Verfahren zum spanlosen Entfernen eines Sekundärgrates.

Die hierin verwendeten Ausdrücke "verzahnt" und "Verzahnung" bezeichnen beliebige Außen- oder Innenverzahnungen, bei denen der Zahneingriff abwälzend erfolgt. Insbesondere können die Verzahnungen zylindrisch oder kegelförmig sein.

Der Erfindung liegt die Aufgabe zugrunde, ein Verfahren und eine Vorrichtung der eingangs genannten Art zu schaffen, die eine verbesserte Beseitigung des Sekundärgrates ermöglichen.

Erfindungsgemäß wird diese Aufgabe hinsichtlich des Verfahrens dadurch gelöst, daß die Beseitigung des Sekundärgrates durch eine von dem Zahneingriff hervorgerufene Schneidbewegung einer auf einer Zahnflanke des Werkzeugrades ausgebildeten Schneidkante erfolgt, sowie die weiteren Merkmale von Anspruch 1.

Bei dem erfindungsgemäßen Verfahren werden also die Sekundärgrate nicht drückend glattgewalzt, sondern durch die Schneidbewegung der Schneidkante spanend abgetragen. Durch den kämmenden Zahneingriff zwischen dem Werkstückrad und dem Werkzeugrad erfolgt die Schneidbewegung im wesentlichen in der Zahnhöhenrichtung über den Randbe-reich der Zahnflanke, in dem der Sekundärgrat aufgeworfen worden ist. Diese Schneidbewegung kann in der Richtung vom Zahnkopf zum Zahnfuß hin oder in der dazu entgegengesetzten Richtung erfolgen. Weiterhin kann jeder Zahn des Werkzeugrades sowohl an seiner Linksflanke als auch an seiner Rechtsflanke eine derartige Schneide aufweisen. In diesem Fall werden die Links- und Rechtsflanken aufeinanderfolgender Zähne des Werkstückrades unmittelbar aufeinanderfolgend von ihren Sekundärgraten befreit.

Die Umarbeitung der Zahnkanten in ihre Fasen erfolgt durch Umformen, es entsteht der Sekundärgrat. In dem erfindungsgemäßen Verfahren ist vorgesehen, daß die Umarbeitung der endseitigen Zahnkante des Werkstückrades durch deren plastische Verformung mittels eines damit kämmenden Zahns eines verzahnten Anfasrades erfolgt. Dabei entspricht der Schrägungswinkel der Zähne des Anfasrades in seinem mit dem Werkstückrad in Zahneingriff gelangenden Bereich der zu erzeugenden Fase des Werkstückrades.

In vorrichtungsmäßiger Hinsicht wird eine von dem Anspruch nicht gedeckte Vorrichtung beschrieben, zum Beseitigen eines Sekundärgrates an einem verzahnten Werkstückrad, der durch eine Umarbeitung einer endseitigen Zahnkante eines Zahns in eine eine Endfläche und eine Zahnflänke des Zahns verbindende Fase in einem an die Fase angrenzenden Randbereich der Zahnflanke aufgeworfen ist, mit einem verzahnten Werkzeugrad, dessen Zahnflanken mit den Zahnflanken des Werkstückrades drehend in Zahneingriff bringbar sind, wobei auf einer Zahnflanke des Werkzeugrades in einem mit dem Randbereich der Zahnflanke des Werkstückrades in Zahneingriff bringbaren Flankenbereich eine sich in der Zahnbreitenrichtung erstreckende Schneidkante ausgebildet ist.

Bei dieser Vorrichtung bewegt sich die Schneidkante beim Zahneingriff im wesentlichen in der Zahnhöhenrichtung über den den Sekundärgrat aufweisenden Randbereich der Zahnflanke des Werkstückrades hinweg und schneidet dadurch den Sekundärgrat ab. Vorzugsweise ist sowohl die Linksflanke als auch die Rechtsflanke jedes Zahns des Werkzeugrades mit mindestens einer derartigen Schneide versehen, die infolge dieser Anordnung nacheinander mit den Linksflanken und Rechtsflanken aufeinanderfolgender Zähne des Werkstückrades in Schneideingriff gelangen.

Vorzugsweise ist vorgesehen, daß die Zahnflanken des Werkzeugrades in der Zahnbreitenrichtung hohl gewölbt sind. Durch diese Hohlwölbung wird sichergestellt, daß der Bearbeitungsangriff des Werkzeugrades nur an den die Sekundärgrate aufweisenden Randbereichen der Zahnflanken stattfindet, während die sich von dort aus in der Zahnbreitenrichtung zur Zahnmitte hin erstreckenden Bereiche der Zahnflanken von dem Werkzeugrad nicht berührt werden und deshalb keinerlei Bearbeitung erfahren.

Die Schneidkante kann durch einen Abschnitt einer von der Zahnflanke begrenzten Randkante einer zu der Zahnflanke hin offenen Ausnehmung des Zahns des Werkzeugrades gebildet sein. Hierbei stellt der an den die Schneide bildenden Abschnitt der Randkante angrenzende Bereich der Zahnflanke die Freifläche und der an diesen Abschnitt angrenzende Wandungsbereich der Ausnehmung die Spanfläche der Schneidkante dar.

Vorzugsweise ist vorgesehen, daß die Zahnflanke des Werkzeugrades mehrere in der Zahnhöhenrichtung voneinander beabstandete Schneidkanten aufweist. Diese Schneidkanten können beim Zahneingriff auf in der Zahnhöhenrichtung aufeinanderfolgende unterschiedliche Abschnitte des Sekundärgrates einwirken. Durch eine entsprechende Wahl des Verhältnisses zwischen der Anzahl der Zähne des Werkzeugrades und der Anzahl der Zähne des Werkstückrades läßt sich sicherstellen, daß jedenfalls nach einer ausreichenden Anzahl von Umdrehungen eine vollständige Überdeckung zwischen den Bewegungswegen dieser Schneidkanten und dem Sekundärgrat stattfindet, so daß letzterer vollständig abgeschnitten wird.

Eine vorteilhafte Vorrichtung zeichnet sich ferner dadurch aus, daß jede Ausnehmung zu der ihr benachbarten Endfläche des Zahns des Werkzeugrades hin offen ist und sich von der Linksflanke des Zahns bis zu dessen Rechtsflanke erstreckt. Dadurch lassen sich die Ausnehmungen in einfacher Weise durch eine Materialabtragung von der Stirnfläche des Werkzeugrades her ausbilden. Auf ihre Querschnittsform in ihrer zum Stirnschnitt orthogonalen Schnittansicht kommt es im einzelnen nicht an, solange durch ihre Form die Bildung der Schneidkanten zur Entfernung der Sekundärgrate sichergestellt ist.

In diesem Zusammenhang hat es sich als vorteilhaft erwiesen, daß die Ausnehmungen im Stirnschnitt auf einem Gang einer Spirale liegen. Dabei kann vorgesehen sein, daß die Spirale mehrgängig ist. Beispielsweise liegt die Zahl der Gänge zwischen 3 und 7. Alternativ könnten die Ausnehmungen im Stirnschnitt auch auf einem oder mehreren Kreisbögen liegen. In allen diesen Fällen wird das zu ihrer Herstellung verwendete Werkzeug unter axialem Vorschub längs einer entsprechenden Bahnkurve relativ zur Stirnfläche des Werkzeugrades bewegt.

Gemäß einem weiteren Gedanken der Erfindung ist vorgesehen, daß das Werkzeugrad mit einem dazu koaxialen, verzahnten Anfasrad drehfest verbunden ist, dessen mit den Zahnkanten des Werkstückrades in Eingriff bringbaren Zähne einen der Fase entsprechenden Schrägungswinkel aufweisen. Durch die Drehung des Werkstückrades im kämmenden Eingriff mit dieser das Werkzeugrad und das Anfasrad kombinierenden Einrichtung erfolgt erfindungsgemäß in ein und demselben Vorgang sowohl die Anfasung als auch die Sekundärgratbeseitigung. Dabei kann insbesondere vorgesehen sein, daß die Zähne des Anfasrades nur auf einem Teilabschnitt seines Umfangs vorgesehen sind. Ferner genügt es, wenn die Zähne des Werkzeugrades nur auf einem von diesem Teilabschnitt verschiedenen Teilabschnitt seines Umfangs mit den Schneidkanten versehen sind. Auch in diesem Fall kann durch eine entsprechende Anzahl von Umdrehungen und eine geeignete Wahl des Verhältnisses zwischen der Anzahl der Zähne des Anfasrades und der Anzahl der Zähne des Werkstückrades stets sichergestellt werden, daß letzteres an allen seinen Zähnen mit der Fase versehen wird.

Weitere Merkmale, Einzelheiten und Vorteile der Erfindung ergeben sich aus der folgenden Beschreibung, in der die Erfindung unter Bezugnahme auf die Zeichnung beispielhaft erläutert ist. Hierin zeigen:
- Fig. 1: eine perspektivische Ansicht eines stirnverzahnten Werkzeugrades
- Fig. 2: eine stirnseitige Ansicht des Werkzeugrades von Fig. 1,
- Fig. 3: einen Schnitt längs der Linie A-A in Fig. 2, und
- Fig. 4: einen Ausschnitt aus Fig. 3 in vergrößerter Darstellung.

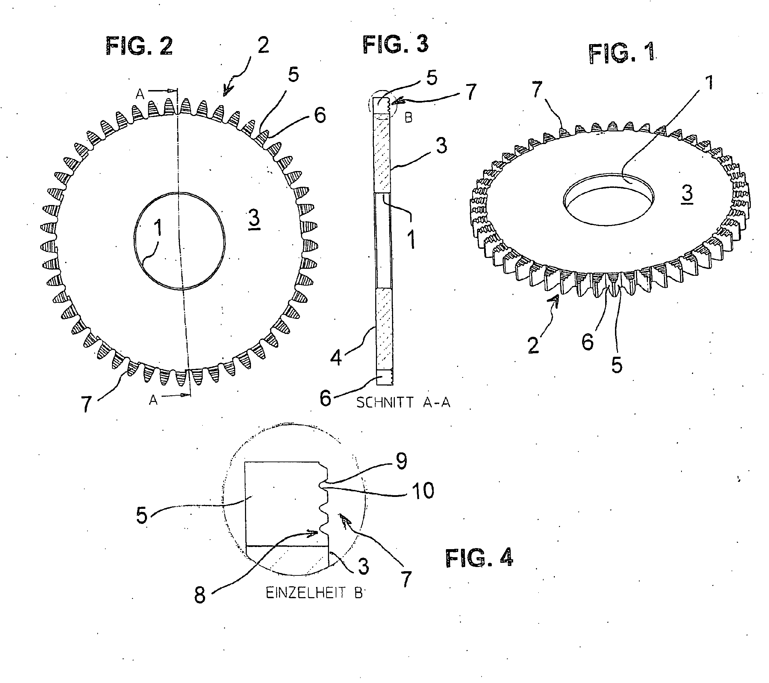

Ein in der Zeichnung in verschiedenen Ansichten dargestelltes zylindrisch verzahntes Werkzeugrad weist eine zu seiner Drehachse koaxiale zylindrische Nabenfläche 1 zur Aufnahme einer seiner drehenden Lagerung dienenden Welle oder Achse, eine zu seiner Drehachse koaxiale Verzahnung mit einer Anzahl von Zähnen 2 und zwei zu seiner Drehachse orthogonale Stirnflächen 3, 4 auf, die sich von der Nabenfläche 1 aus radial bis zum Kopfkreis der Verzahnung erstrecken. Jeder Zahn 2 weist eine linke Zahnflanke 5 und eine rechte Zahnflanke 6 auf, die in den Fig. 3 und 4 in einer zur Drehachse orthogonalen Aufsicht erscheinen.

Die Stirnfläche 3 verläuft in ihrem sich zwischen der Nabenfläche 1 und dem Fußkreis der Verzahnung erstreckenden Bereich vollständig eben. Dagegen sind in ihrem sich zwischen dem Fußkreis und dem Kopfkreis der Verzahnung erstreckenden, die Endflächen der Zähne 2 bildenden Bereich die Zähne 2 mit rillenartigen Ausnehmungen 7 versehen. Diese Ausnehmungen 7 erstrecken sich an jedem Zahn 2 im Stirnschnitt gesehen von dessen linker Zahnflanke 5 bis zu dessen rechter Zahnflanke 6. Dadurch begrenzen die Ausnehmungen 7 auf der jeweiligen Zahnflanke 5, 6 eine Randkante 8, deren sich in der Zahnbreitenrichtung erstreckende Abschnitte 9, 10 jeweils eine Schneidkante bilden. Dabei stellen die an die Schneidkanten 9, 10 angrenzenden Bereiche der Zahnflanken 5, 6 die zu der Schneidkante gehörende Freifläche und die an die Schneidkanten 9, 10 angrenzenden Wandungsbereiche der Ausnehmungen 7 die zugehörige Spanfläche dar.

Die Zeichnung läßt ferner erkennen, daß die Ausnehmungen 7 aller Zähne 2 auf um die Drehachse zentrierten bogenförmigen Kurvenabschnitten liegen. Insbesondere kann es sich dabei um Kreisbogenabschnitte oder Gänge einer Spirale handeln. In ihrem zur Stirnschnittebene orthogonalen Querschnitt, wie er beispielsweise in Fig. 4 erscheint, ist die Form der Ausnehmungen 7 weitgehend beliebig; es ist lediglich erforderlich, daß die durch die Ausnehmungen 7 bestimmten Randkanten 8 mindestens einen Abschnitt 9, 10 aufweisen, der sich in Richtung auf das der Stirnseite 3 entgegengesetzte stirnseitige Ende des betreffenden Zahns 2 erstreckt.

Das in der Zeichnung dargestellte Werkzeugrad dient zur Bearbeitung eines zylindrisch verzahnten Werkstückrades (nicht dargestellt), dessen endseitige Zahnkanten jeweils in eine Fase umgearbeitet worden sind, welche die betreffende Zahnflanke mit der Endfläche des Zahns verbindet, wobei durch diese Umarbeitung jeweils in dem an die Fase angrenzenden Randbereich der Zahnflanke ein Sekundärgrat aufgeworfen worden ist. Hierzu wird für die Bearbeitung das in der Zeichnung dargestellte Werkzeugrad mit dem zu bearbeitenden Werkstückrad drehend in Zahneingriff gebracht. Dabei wird die axiale Stellung zwischen dem Werkstückrad und dem Werkzeugrad derart gewählt, daß die mit den Schneidkanten 9, 10 versehenen Flankenbereiche des Werkzeugrades mit den die Sekundärgrate aufweisenden Randbereichen der Zahnflanken des Werkstückrades in Eingriff gelangen. Dadurch laufen die Schneidkanten 9, 10 in einer im wesentlichen längs der Zahnhöhenrichtung des Werkstückrades erfolgenden Schneidbewegung spanend über die Sekundärgrate des Werkstückrades hinweg, so daß nach einigen Umdrehungen die Sekundärgrate im wesentlichen beseitigt sind.

Das in der Zeichnung dargestellte Werkzeugrad ist nur an seiner einen Stirnfläche 3 mit den die Schneidkanten 9, 10 bildenden Ausnehmungen 7 versehen, während die andere Stirnfläche 4 vollständig plan ist. An diese plane Stirnfläche 4 kann in spiegelbildlicher Anordnung ein gemäß der Zeichnung ausgebildetes weiteres Werkzeugrad mit seiner planen Stirnfläche 4 angeschlossen werden. In diesem Fall können die in den beiden flankenseitigen Endbereichen der Werkstückradzähne aufgeworfenen Sekundärgrate gleichzeitig beseitigt werden. Dies setzt jedoch voraus, daß die Summe der axialen Dicken der beiden aneinander angeschlossenen Werkzeugräder dem axialen Abstand der die Sekundärgrate aufweisenden Randbereiche der Zahnflanken des Werkstückrades entspricht. Es versteht sich, daß die entsprechende Anpassung durch Distanzscheiben erfolgen kann, welche zwischen die einander zugewandten Stirnflächen 4 der beiden Werkzeugräder eingefügt werden. Durch eine geeignete axiale Dimensionierung kann diese Ausführungsform auch einstückig ausgebildet werden, indem die Ausnehmungen 7 an beiden Stirnflächen 3, 4 vorgesehen werden.

Alternativ ist es auch möglich, zwei gemäß der Zeichnung ausgebildete Werkzeugräder unter einem für eine beidseitige Beseitigung der Sekundärgrate geeigneten Abstand derart einander koaxial gegenüberzustellen, daß ihre die Ausnehmungen 7 aufweisenden Stirnflächen 3 einander zugewandt sind.

Da der Flankeneingriff zwischen dem Werkzeugrad und dem Werkstückrad nur in den die Sekundärgrate aufweisenden Randbereichen der Zahnflanken erforderlich und erwünscht ist, können die Zähne 2 des Werkzeugrades derart gestaltet sein, daß ihre Zahndicke in der Zahnbreitenrichtung zur Zahnmitte hin abnimmt. Beispielsweise kann dies dadurch geschehen, daß die Zähne 2 des Werkstückrades hohl geschliffen werden.

Die Verzahnung des in der Zeichnung dargestellten Werkzeugrades ist eine Geradverzahnung. Diese ist für die Bearbeitung von geradverzahnten Werkstückrädern geeignet. Für schrägverzahnte Werkstückräder wird das Werkzeugrad mit einem entsprechenden Schrägungswinkel ausgelegt.

Weiterhin kann an die mit den Ausnehmungen 7 versehenen Stirnflächen 3 ein zu dem Werkstückrad koaxiales Anfasrad angeschlossen werden, das in seinem Aufbau und seiner Funktion dem in EP 1 270 127 A1 offenbarten Wälzentgratrad entspricht. Dieses Anfasrad (nicht dargestellt) ist über die Gesamtheit oder einen Teil seines Umfangs mit Zähnen versehen, deren Schrägungswinkel der an dem Werkstückrad zu erzeugenden Phase entspricht. Durch diese Kombination des Werkzeugrades mit dem durch seinen kämmenden Eingriff mit den Zahnkanten des Werkstückrades deren Umformung bewirkenden Anfasrad kann in ein und demselben Arbeitsgang sowohl die Anfasung der Zahnkanten als auch die Beseitigung der dadurch aufgeworfenen Sekundärgrate erfolgen.

### Liste der Bezugszeichen

- 1: Nabenfläche
- 2: Zähne
- 3, 4: Stirnflächen
- 5, 6: Zahnflanken
- 7: Ausnehmungen
- 8: Randkante
- 9, 10: Schneidkanten

## Patentansprüche

1. Verfahren zum Beseitigen eines Sekundärgrates an einem verzahnten Werkstückrad, der durch eine Umarbeitung einer endseitigen Zahnkante eines Zahns in eine eine Endfläche und eine Zahnflanke des Zahns verbindende Fase in einem an die Fase angrenzenden Randbereich der Zahnflanke aufgeworfen wird, bei dem die Zahnflanken des Werkstückrades mit Zahnflanken eines verzahnten Werkzeugrades drehend in Zahneingriff gebracht werden, **dadurch gekennzeichnet, dass** die Beseitigung des Sekundärgrates durch eine von dem Zahneingriff hervorgerufene Schneidbewegung einer auf einer Zahnflanke (5, 6) des Werkzeugrades ausgebildeten Schneidkante (9, 10) erfolgt, wobei die Umarbeitung der Zahnkante des Werkstückrades durch deren plastische Umformung mittels eines damit kämmenden Zahns eines verzahnten Anfasrades erfolgt und wobei durch Drehung des Werkstückrads im kämmenden Eingriff mit einer das Werkzeugrad und das Anfasrad kombinierenden Einrichtung sowohl die Anfasung als auch die Sekundärgratbeseitigung in ein und demselben Vorgang erfolgen.

## Claims

1. A method for removing a secondary burr on a toothed workpiece wheel, which burr was created in reworking an end tooth edge of a tooth into a chamfer that connects an end face and a tooth flank of the tooth in a peripheral zone of the tooth flank adjacent to the chamfer, wherein the tooth flanks of the workpiece wheel mesh in rotation with tooth flanks of a toothed tool wheel, **characterised in that** the secondary burr is removed by a cutting motion, created by the meshing, of a cutting edge (9, 10) formed on a tooth flank (5, 6) of the tool wheel, the tooth edge of the workpiece wheel being reworked by the plastic reshaping of said tooth edge by means of a tooth of a toothed chamfering wheeling meshing therewith, and both the chamfering and the removal of the secondary burr taking place in one and the same process by rotation of the workpiece wheel in meshing engagement with a device combining the tool wheel and the chamfering wheel.

## Revendications

1. Procédé d'élimination d'une bavure secondaire sur une roue dentée à usiner, laquelle a été créée suite à une retouche d'une arête terminale d'une dent visant à produire un chanfrein reliant une surface terminale et un flanc de la dent, dans une zone périphérique du flanc de dent bordant ledit chanfrein, dans lequel procédé les flancs de dent de la roue à usiner sont amenés à s'engrener, par rotation, avec les flancs de dent d'une roue dentée formant outil, **caractérisé en ce que** l'élimination de la bavure secondaire est réalisée grâce au mouvement de coupe, produit par l'engrènement, d'une arête de coupe (9, 10) qui est constituée sur un flanc de dent (5, 6) de la roue formant outil, la retouche de l'arête de dent de la roue à usiner se produisant par la transformation plastique de celle-ci au moyen d'une dent d'une roue à chanfreiner dentée venant s'engrener avec celle-ci, le chanfreinage ainsi que l'élimination de la bavure secondaire s'effectuant en une seule et même opération grâce à la rotation de la roue à usiner en engrènement avec un dispositif combinant la roue formant outil et la roue à chanfreiner.
